# EUROPEAN PATENT SPECIFICATION

(11) **EP 1 430 347 B1**
(45) Date of publication and mention of the grant of the patent: **13.08.2008**
(21) Application number: 02780212.3
(22) Date of filing: 23.09.2002
(51) Int. Cl.: G02B 27/00, G02B 17/00, G02B 5/04

(54) **AN OPTICAL SYSTEM, OPTICAL ELEMENT, AND A USER UNIT FOR ILLUMINATION AND IMAGING OF AN OBJECT**
OPTISCHES SYSTEM, OPTISCHES ELEMENT UND BENÜTZEREINHEIT ZUM BELEUCHTEN UND ABBILDEN EINES OBJEKTS
SYSTEME OPTIQUE, ELEMENT OPTIQUE ET UNITE D'UTILISATEUR SERVANT A ECLAIRER UN OBJET ET A EN PRENDRE L'IMAGE

(30) Priority: 21.09.2001 SE 0103152
(43) Date of publication of application: 23.06.2004
(73) Proprietor: Anoto AB, 223 69 Lund (SE)
(72) Inventor: CRAVEN-BARTLE, Thomas, S-226 57 Lund (SE)
(74) Representative: Perklev, Karin Cecilia
(86) International application number: PCT/SE2002/001730
(87) International publication number: WO 2003/025658

(56) References cited:
- DE-A1- 4 035 077
- GB-A- 2 166 831
- US-A- 6 084 703

## Description

### Field of the Invention

The present invention relates to an optical system arranged to illuminate an object plane and to transmit an image of the object plane to an image plane. The invention also relates to an optical component for such a system, a handheld user unit and a method for illuminating an object plane and capturing an image thereof.

### Background Art

Optical systems of the above type are used in a large number of devices, for example handheld devices with imaging capability, such as handheld scanners and optical pens. In such devices, it is important for the optical system and the optical components included to be made as compact as possible so as to keep the total size down. For an optical system used in an optical pen, the relevant object has usually an extent of less than one centimeter, and the image formed by the imaging optics is usually within a surface of a few square millimeters. Such an optical pen is disclosed in WO 01/71654, which is incorporated herein by reference. Of course, other dimensions of the optical system may be involved for other types of devices.

The optical system typically includes imaging optics, a radiation source and a radiation sensor. For reasons of production, it is important that the components included in the optical system can be mounted in a manner which is as simple, robust and space-efficient as possible. In handheld devices, it is common to mount the imaging optics and the sensor side by side with the radiation source, which results in separate illumination and imaging paths. Such mounting, however, requires a great deal of space in the handheld device.

A typical requirement placed on optical systems in handheld devices is that they must be able to adequately image objects at different distances. This means that the system should have a sufficiently large depth of field, which calls for a high f-number of the system and, thus, a relatively small aperture stop. Such a system will permit relatively little radiation to reach the image plane from the illuminated object plane. The object plane must therefore be exposed to a high intensity of illuminating radiation.

Further, in optical systems with separate illumination and imaging paths, the illuminated area and the imaged area in the object plane can only be brought to coincide for a given nominal object distance. Whenever there is a need to accommodate for various object distances within the depth of field, it is necessary to illuminate a considerably larger object plane area than the one that is to be imaged at the nominal object distance. Thus, the radiation from the radiation source is used inefficiently, which further accentuates the need for a powerful radiation source.

Such a powerful radiation source may exhibit several drawbacks, such as being expensive, non-durable, power-consuming and bulky.

The above problems may also be present in optical systems with partly overlapping illumination and imaging paths. WO 00/72287 discloses an optical pen with such an optical system, in which a beam splitter is arranged to reflect radiation from a radiation source onto an object plane and to transmit any retro-reflected radiation from the object plane to imaging optics that forms an image of the illuminated object plane on a sensor. Such a system makes inefficient use of the available radiation, since every interaction with the beam splitter results in a considerable loss of radiation. Typically 50% of the incident radiation from the radiation source is transmitted by the beam splitter instead of being reflected towards the object plane, and typically another 50% of the retro-reflected radiation is reflected by the beam splitter instead of being transmitted to the sensor. Further, any such transmission of the incident radiation from the presumably powerful radiation source is likely to produce significant background radiation which might interfere with the transmitted retro-reflected radiation that forms the image signal on the sensor. Additionally, the beam splitter is a potentially expensive component, in particular if it should exhibit controlled surface and transmission properties.

A similar optical arrangement is disclosed in GB-A-2 166 831.

US 4,626,079 discloses another optical arrangement for epi-illumination in a dark field illumination apparatus. An objective lens is provided to collect light from an object plane. The object plane is illuminated by light, which is guided as an annular light beam around the objective lens towards the object plane. An annular reflective mirror reflects light from a radiation source towards the object plane and provides a central hole for allowing light from the objective lens to pass through the mirror.

The prior art also comprises US-A-6 114 712 which discloses a handheld scanner with yet another form of optical system with partly overlapping illumination and imaging paths.

### Summary of the Invention

One object of the present invention is to allow simple, robust and space-efficient mounting of the parts included in an optical system, and to enable more efficient utilization of the radiation from a radiation source in the system.

According to the invention, the object is fully or at least partly achieved by the optical system according to claims 1 and 30, the optical component according to claims 31, 40 and 41, the handheld user unit according to claim 54, and the method according to claim 55. Preferred embodiments of the invention are defined in the dependent claims.

According to one aspect of the invention, it relates to an optical system arranged to illuminate an object plane and to transmit an image of the object plane to an image plane, said system comprising an optical component that reflects first radiation, which is emitted by a radiation source, towards the object plane while also transmitting second radiation from the object plane towards the image plane, wherein the optical component comprises a reflective surface portion arranged to reflect the first radiation and a spatially separate transparent surface portion arranged to transmit the second radiation.

Such an optical system allows for partially overlapping illumination and imaging paths, and can thus be made compact. In such a system it is possible, as explained above, to accomplish coincident illuminated and imaged areas in the object plane, for all object distances within the depth of field. In other words, the optical component can be arranged to reflect the first radiation essentially concentric with the optical axis of the optical system to illuminate the object plane, the optical axis being defined by the travel path of the second radiation from the object plane to the image plane.

Further, the optical system allows for efficient use of the available radiation, in that reflection of the first radiation from the radiation source can be effected separately from transmission of second radiation from the object plane. The reflective surface portion can thus be optimized for reflection of the first radiation, whereas the transparent surface portion can be optimized for transmission of the second radiation. Thus, the optical system according to the invention has the potential of reducing manufacturing costs by allowing for the use of a less powerful radiation source and/or of producing a stronger image signal in the image plane.

The spatial separation of the reflective and transparent surface portions may also minimize the amount of background radiation that reaches the image plane, again as it allows for separate optimization of the reflective surface portion and transparent surface portion. For this reason, the reflective surface portion is suitably essentially totally reflective to the first radiation as well as the second radiation.

The optical system is also rendered simple and robust by the reflective and transparent surface portions being incorporated in one and the same optical component.

The reflective surface portion may be arranged in surrounding relationship to the transparent surface portion. In such an embodiment, the reflective surface portion may thus define the extent of the transparent surface portion.

The optical component may be arranged with the transparent surface portion serving as a stop in the optical system. Thereby, the number of separate parts in the system may be reduced. This may also reduce the tolerances of the optical system. An optical pen, for example, may have a compact optical system with several small or minute optical elements, and it may be difficult to manufacture and install such elements with the required precision. By incorporating the stop in the optical component, the manufacture and installation of the stop may be facilitated. This may be particularly true for the aperture stop which determines the depth of field of the system, since such a stop may have a diameter in the order of 0.5-1.0 mm in, for example, an optical pen.

Furthermore, the transparent surface portion can be arranged to be screened from the first radiation from the radiation source, so as to minimize the amount of first radiation reaching the image plane. This may be accomplished by positioning the transparent surface portion in a plane which is essentially parallel to the main direction of the first radiation from the radiation source. Such an arrangement of the transparent surface portion may be convenient in terms of manufacture, for example in a molding or grinding step. Furthermore, the plane of the transparent surface portion may be arranged essentially perpendicular to the optical axis of the system.

It may also be advantageous to arrange the transparent surface portion to include an intersection between the optical axis of the system and the main direction of the first radiation.

In one embodiment, the reflective surface portion of the optical component may comprise two reflective roof faces which intersect in a trench line to form a reflective roof section. The transparent surface portion may be formed in the reflective roof section along and around the trench line.

The reflective surface portion may further comprise two secondary reflective roof faces which intersect in a ridge to form part of the reflective roof section, the ridge being essentially aligned with the trench line and a transition between the trench line and the ridge defining the transparent surface portion. In such an embodiment, essentially all incident first radiation can be reflected towards the object plane, with only limited influence on the beam profile of the incident first radiation.

In one embodiment, the optical system may comprise a light guide, which may be incorporated as part of the optical component. Such a light guide may be arranged to collect the first radiation from the radiation source, so that the radiation source can be arranged at a larger distance from the reflective surface portion without deteriorating the function of the optical system. The light guide may have the additional function of achieving a controlled modification of the beam profile of the incident first radiation.

The optical system may, alternatively or additionally, comprise a light guide which is arranged to receive the first radiation from the reflective surface portion. Such a light guide may be incorporated as part of the optical component. The light guide may result in increased degree of freedom in the placement of the object plane with respect to the reflective surface portion. The light guide may further be used to achieve a controlled modification of the beam profile of the first radiation that enters the light guide.

In one embodiment, the optical component is in the shape of a shell. Such a configuration may reduce any uncontrolled retro-reflection of first radiation into the transparent surface portion, by eliminating any step-changes in refractive index in the radiation path from the reflective surface portion to the object plane. Another advantage may be a reduction in weight of the optical system.

The shell-shaped optical component may suitably be coated with or manufactured in a reflecting material. Such a component is relatively insensitive to any dirt or particles being deposited on the reflective surface portion.

In another embodiment, the optical component is a prism. Here, the reflective surface portion may be formed by reflective surfaces that are mutually arranged to provide total internal reflection of the incident first and second radiation. Alternatively or additionally, at least part of the reflective surface portion may be coated with a reflecting material.

The prism may be simple to manufacture since only a few manufacturing steps are required to obtain the given relationships between the reflective surfaces. Manufacture may also be simplified by the fact that the prism may not have to be coated with a reflecting material. A prism is also relatively robust. In other embodiments, the reflective surface portion of the prism may be coated with a reflecting material, which gives the advantage of providing a component which is even less sensitive to deposition of dirt or particles, and reduces the risk of any first radiation leaking out of the optical component towards the image plane.

The system may comprise a refractive surface which is arranged to receive the first radiation from the reflective surface portion. This refractive surface, which may be incorporated as part of the optical component, may be a lens surface which may be inclined relative to the optical axis of the system and adapted to prevent any retro-reflection of the first radiation into the transparent surface portion.

Irrespective of whether the optical component is a prism or a shell, the transparent surface portion may include a refractive surface, such as an imaging lens surface arranged to receive the second radiation from the object plane. This may facilitate the assembly of the optical system as well as reduce the tolerances of the optical system, since the refractive surface may be precisely positioned with respect to the reflective and transparent surface portions. Further, the number of degrees of freedom in the system is increased, making it possible to dispense with one or more other refractive surfaces in the system.

In one embodiment, the image path is bent so that the image plane is arranged essentially level with the radiation source. Such a design may facilitate the assembly and mounting of the optical system. For example, the optical system may be interfaced with a flat printed-circuit board, on which the radiation source and a two-dimensional radiation detector are mounted.

According to other aspects, the invention relates to the optical component itself, and a handheld user unit with the optical system or the optical component. Embodiments thereof, and corresponding advantages, may be inferred from the above discussion about the optical system.

According to a further aspect of the invention, it relates to a method for illuminating an object plane and capturing an image thereof, comprising: activating a radiation source to generate radiation, receiving at least part of the generated radiation on a stationary reflective surface portion and redirecting it by reflection towards the object plane, and collecting second radiation from the object plane to form an image in an image plane, wherein the second radiation is collected through a transparent surface portion which is physically connected to, but spatially separate from, the reflective surface portion.

Embodiments of this method, and corresponding advantages, may be inferred from the above discussion about the optical system.

### Brief Description of the Drawings

The invention will now be described in more detail with reference to the accompanying schematic drawings which by way of example illustrate currently preferred embodiments of the invention.

Fig. 1 is a side view of the radiation paths within an optical system according to the invention.

Fig. 2 is a side view of an embodiment of an optical system according to the invention.

Fig. 3 is a side view of an alternative arrangement of the embodiment in Fig. 2.

Fig. 4 is a perspective view of an embodiment of an optical component included in the system in Figs 2-3.

Fig. 5 is a perspective view of a first alternative embodiment of the optical component in Fig. 4.

Fig. 6 is a perspective view of a second alternative embodiment of the optical component.

Figs 7a-7b are perspective views of modifications of the optical component in Fig. 4.

Fig. 8 is a perspective view of a third alternative embodiment of the optical component, wherein interior cavities of the component are illustrated by full lines.

Fig. 9 is a bottom view of a front part of the component in Fig. 8, wherein a front cavity is indicated with full lines.

Fig. 10 is a front end view of the component in Fig. 8.

### Description of Preferred Embodiments

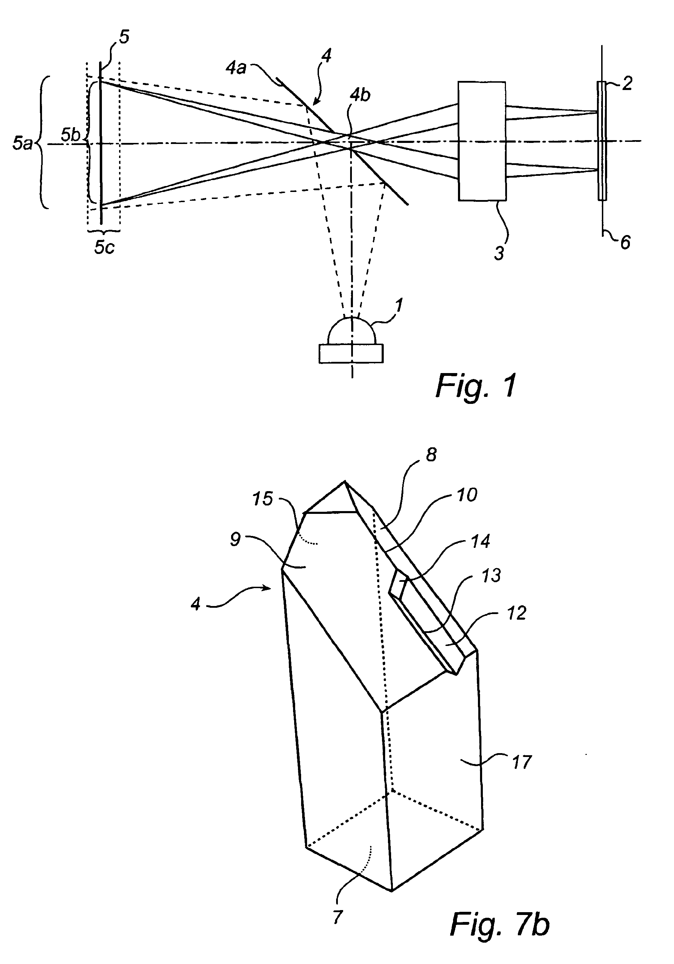

Fig. 1 shows the general arrangement of an optical system according to the invention. The optical system includes a radiation source 1, a radiation sensor 2, imaging optics 3, and a dual-path component 4. The source 1 emits radiation (indicated by dashed lines in Fig. 1) which is directed to illuminate an area 5a in an object plane 5. The imaging optics 3 collects radiation (indicated by full lines in Fig. 1) within its field of view 5b in the object plane 5 and forms an image of the object plane in an image plane 6, where it is captured by the sensor 2.

Normally, the image is formed from radiation that is reflected off any object present within the depth of field 5c of the optical system. Such reflected radiation may be a combination of radiation from the source 1 and other ambient radiation. The source 1 may be emitting radiation continuously or intermittently. In the latter case, the activation of the source 1 and the exposure of the sensor 2 are suitably synchronized temporally.

The source 1 may be any form of radiation-generating element(s), such as one or more laser diodes, one or more filament lamps, one or more discharge lamps, one or more light-emitting diodes etc. The sensor 2 may be any form of radiation-sensitive device, such as photographic film or an electronic detector, for example a solid state area detector such as a CCD or CMOS detector. The imaging optics 3 may include one or more refractive elements, such as optical lenses, one or more mirrors or prisms, and one or more stops, such as an aperture stop, a field stop, etc.

The dual-path component 4 is arranged to merge an illumination path and an imaging path of the system to extend between the dual-path component 4 and the object plane 5. To this end, the dual-path component 4 comprises a mirror surface 4a and a separate transparent window 4b. The mirror surface 4a is arranged to reflect essentially all incident radiation from the source 1, typically a divergent beam, towards the object plane 5. Furthermore, any radiation that falls on the mirror surface 4a from the object plane 5 is also blocked by reflection. The transparent window 4b is arranged to transmit radiation which is collected from the object plane 5 by means of the imaging optics 3.

Fig. 1 also includes an optical axis of the system, illustrated as a horizontal chain line. This axis is defined as a line following a ray from the center of the field of view 5b, through the optical system via the center of the transparent window 4b, to the center of the image on the sensor 2.

The dual-path component 4 of Fig. 1 allows for efficient utilization of the available radiation, since essentially all incident radiation may be delivered to the illuminated area 5a. If desired, the illuminated area 5a and the field of view 5b can be brought to essentially coincide over the entire depth of field 5c of the optical system, as illustrated in Fig. 1, so as to maximize the utilization of the available radiation.

Further, the dual-path component of Fig. 1 allows for efficient collection of radiation from the object plane 5, since such radiation may be collected with minimum losses through the transparent window 4b.

Still further, the dual-path component of Fig. 1 generally allows the transparent window 4b to form the aperture stop of the optical system. This may be advantageous with respect to both manufacture and assembly of the optical system, especially in systems with a large depth of field and, thus, a minute aperture stop.

If the source 1 emits a divergent beam of radiation, the source might be placed slightly off-center with respect to the mirror surface 4a, so that the entire beam hits the mirror surface 4a. This is illustrated in Fig. 1, where the symmetry line of the source beam (shown as a vertical chain line) is displaced from the center of the transparent window 4b at the center of the mirror surface 4a such that that the source beam illuminates the mirror surface 4a symmetrically around the transparent window 4b.

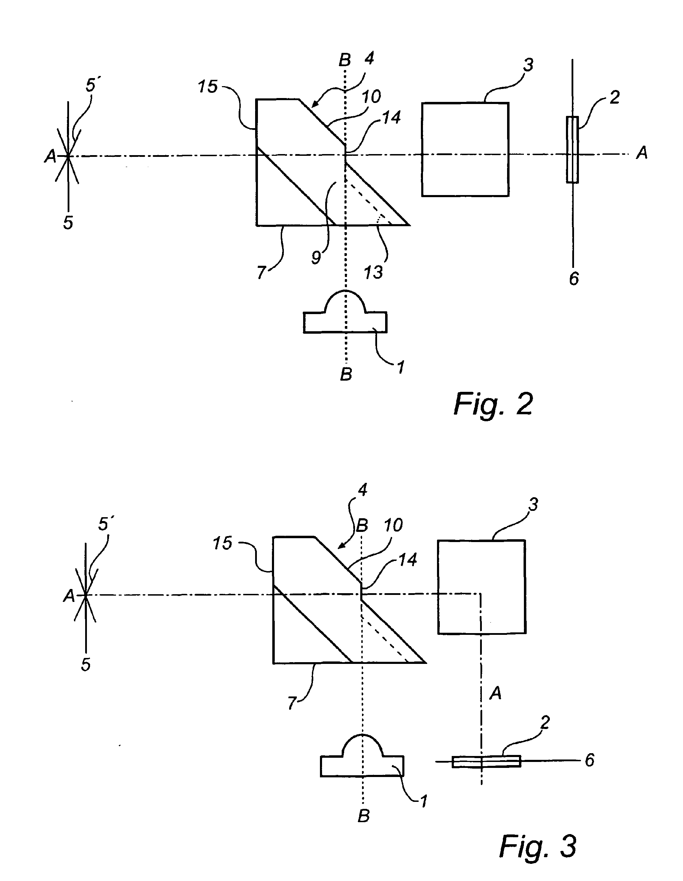

In specific implementations of the above-described optical system, it might be desirable to further optimize the illumination of the object plane 5, as well as to minimize any leakage of incident radiation through the transparent window 4b. Figs 2-10 show different embodiments that fully or partly fulfill such needs. In all drawings, corresponding elements have the same reference numerals.

In Fig. 2, the optical system comprises a source 1 in the form of a light-emitting diode (LED), a sensor 2, imaging optics 3 and a dual-path component 4 in the form of a modified Amici prism. An Amici prism is a right-angled prism which has been provided with a roof edge in one of its surfaces. A right-angled prism or some other type of prism which is provided with a roof edge in this manner is usually referred to as a roof prism.

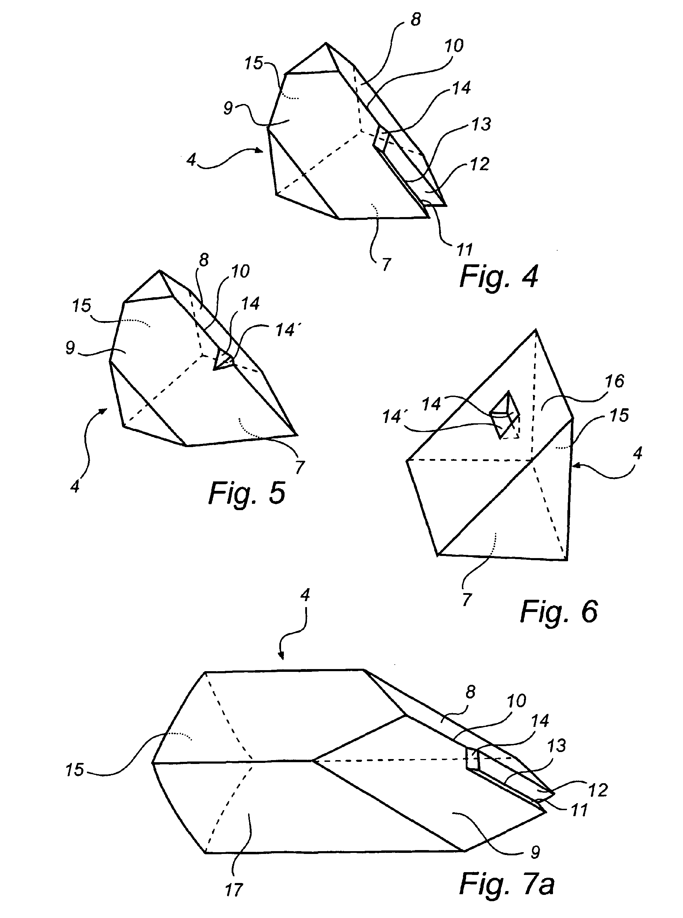

The prism 4, which is shown in more detail in Fig. 4, has an illumination side 7, which is arranged to face the source 1, and two roof faces 8, 9. The two roof faces 8, 9 are mutually inclined and intersect each other along an elongate ridge 10. In this ridge 10 an elongate recess is made, which forms two secondary roof faces 11, 12 which intersect each other in an inverted ridge 13. The transition between the ridges 10, 13 forms a rhombic area 14 which acts as the aperture stop of the optical system. The prism 4 also has an object side 15, which in the optical system faces the object plane 5. Referring back to Fig. 1, the roof faces 8, 9, 11, 12 correspond to the mirror surface 4a, whereas the rhombic area 14 corresponds to the transparent window 4b.

The parts included in the system are arranged relative to each other in such manner that the ray path through the system is such that rays of radiation from the source 1 fall into the dual-path component 4 through the illumination side 7 and are reflected in one or some of the roof faces 8, 9, 11 or 12 and pass through the object side 15 and illuminate the object plane 5. Then rays of radiation project from the object plane 5 back through the dual-path component 4 through the aperture 14 and pass the imaging optics 3 and fall on the sensor 2 which is located in the image plane 6. The imaging optics 3 comprises one or more lenses or other optical components which are arranged to direct the rays so that an image of the object is created on the sensor 2.

As viewed from the illumination side 7 and the object side 15, the roof faces 8, 9, 11, 12 form a reflective roof section which is angled at 45° to the illumination and object sides 7, 15. The roof faces 8, 9 intersect to form a wedge-shaped elongate trench along the line 10. The roof faces 9, 11 and 8, 12 intersect to form a respective elongate wedge-shape secondary trench, whereas the secondary roof faces 11, 12 intersect to form an elongate ridge 13. The roof faces 8, 9, 11 and 12 are angled so as to give total internal reflection of all rays received from the source 1, which causes radiation to project merely from the component 4 through its object side 15. Correspondingly, the roof faces give total internal reflection of all rays received from an object 5' in the object plane 5. In Figs 2 and 4, the roof faces 8, 9; 8, 12; 9, 11; 11, 12 all intersect at right angles. The rhombic area 14 is formed as a planar area at the transition from the trench to the ridge.

The rhombic area 14 is arranged to be screened from the rays emitted by the source 1, and yet to be transparent to rays emitted within the field of view 5b in the object plane 5 (Fig. 1). In Fig. 2, the area 14 is arranged parallel to the main direction of radiation from the source 1, as illustrated by the dotted line B. In another embodiment (not shown), the area 14 is slightly tilted away from the source 1.

Fig. 3 illustrates an alternative arrangement of the optical system of Fig. 2. The imaging optics 3 is here arranged to redirect the rays when they have passed the area 14 in such manner that they fall on the sensor 2 which is placed essentially in the same plane as the source 1. The imaging optics 3 comprises in this embodiment a prism or a mirror inclined to the optical axis and reflecting rays towards the sensor 2. The optical system according to this arrangement can easily be built on a printed circuit board mounting the sensor 2 and the source 1.

It should be noted that the angles of intersection between the roof faces 8, 9, 11, 12 may deviate from 90°. In some cases, angles in the range of about 45-135° may be used without losing the dual-path component's 4 function of totally reflecting radiation from the source 1 towards the object plane 5. The angles of intersection may for example be selected to attain a desired shape of the area 14, for example rectangular. Some or all of the roof faces 8, 9, 11, 12 may furthermore be coated with a reflecting material, for example metal such as aluminum, silver or gold, or a dielectric.

According to a first alternative embodiment as shown in Fig. 5, the dual-path component 4 is a roof prism with two roof faces 8, 9 that intersect along an elongate ridge 10 to form a reflective roof section. A recess is formed in the ridge 10 to define a triangular area 14 that is transparent to rays from the field of view in the object plane. The recess also defines a triangular bottom portion 14' which might be coated with a reflecting material to prevent transmission of source radiation that enters the illumination side 7.

A second alternative embodiment of the invention comprises a dual-path component 4 according to Fig. 6 in the form of a right-angled prism with a recess in one side face 16. The side face is adapted to form a reflective surface to rays entering the illumination side 7 from the source and the object side 15 from the object plane. The recess defines a rectangular area 14 that is transparent to rays from the field of view in the object plane. The recess also defines a rectangular bottom portion 14' which might be coated with a reflecting material to prevent transmission of source radiation that enters the illumination side 7.

As a modification of the above embodiments, the dual-path component 4 may be provided with a light guide 17 on the object side 15, as illustrated in Fig. 7a, or on the illumination side 7, as illustrated in Fig. 7b, or on both sides (not shown). In the modifications shown in Figs 7a-7b, the light guide is rectangular in cross-section, but it is also possible to use a light guide which is, for example, triangular or hexagonal in cross-section.

The light guide 17 may serve any of several purposes. The light guide may be designed to level out the distribution of radiation over the illuminated area in the object plane. The light guide may also be used to diverge or converge the radiation from the source 1. A light guide on the illumination side 7 (Fig. 7b) may also result in an increase of the flexibility in the positioning of the source 1, which is placed at the end of this light guide. Thus, the source 1 can, without deteriorating the function of the optical system, be placed at any desired distance from the reflective surfaces in the dual-path component 4 if desired, for instance, for space reasons. Likewise, a light guide on the object side 15 (Fig. 7a) may allow the system to be designed with the object plane at any desired distance from the source 1 and the sensor 2. If the component 4 is to be arranged in a space which does not accommodate a straight light guide of a given length, such a length may be achieved by arranging light guides on both sides 7, 15 of the component 4.

As a further modification of the above embodiments, the object side 15 may be formed as a lens surface inclined to the optical axis A. This may prevent, or at least diminish, the amount of source radiation that may be retro-reflected in the boundary surface 15. Such retro-reflected source radiation may otherwise pass the area 14 and impinge on the sensor. Generally speaking, either one of the object side 15 and the illumination side 7, or both, can be formed as a refractive surface. Examples of such refractive surfaces are ordinary lens surfaces, which can be spherical or aspherical, Fresnel lenses, and diffractive surfaces. Also a plane surface which is inclined to the optical axis is in this context a refractive surface. The refractive surfaces in the object side 15 and/or the illumination side 7 can then be used, for instance, to replace one or more of any separate refractive elements normally present in the optical system.

As a still further modification of the above embodiments, the transparent window 4b, 14 of the dual-path component 4 may be provided with one or more refractive surfaces, such as lens surfaces. Thus, the transparent window 4b, 14 not only transmits radiation from the object plane, but also refracts the radiation in some controlled way. Such a modification has the potential of simplifying the imaging optics, as well as the assembly of the optical system.

In yet another variation of the above embodiments, the dual-path component 4 can embodied as a shell with a mirror surface which has a shape as in any one of the above embodiments. Such a component can be made of any suitable material, such as plastics, glass or metal, with a reflective coating forming the mirror surface. The reflective coating may be provided in a coating process and comprise, for instance, aluminum, silver, gold, a dielectric, etc. The transparent window 4b, 14 may be formed as a through-hole or a surface of transparent material with a suitable shape. Alternatively, the entire component 4 may be made of a reflecting material such as aluminum, with the transparent window 4b, 14 being provided as a through-hole in the reflecting material. The object side 15 and the illumination side 7, as well as any other non-reflective sides, are optionally not included in this variation, or are uncoated and made of a material which is transparent, i.e. non-diffusing.

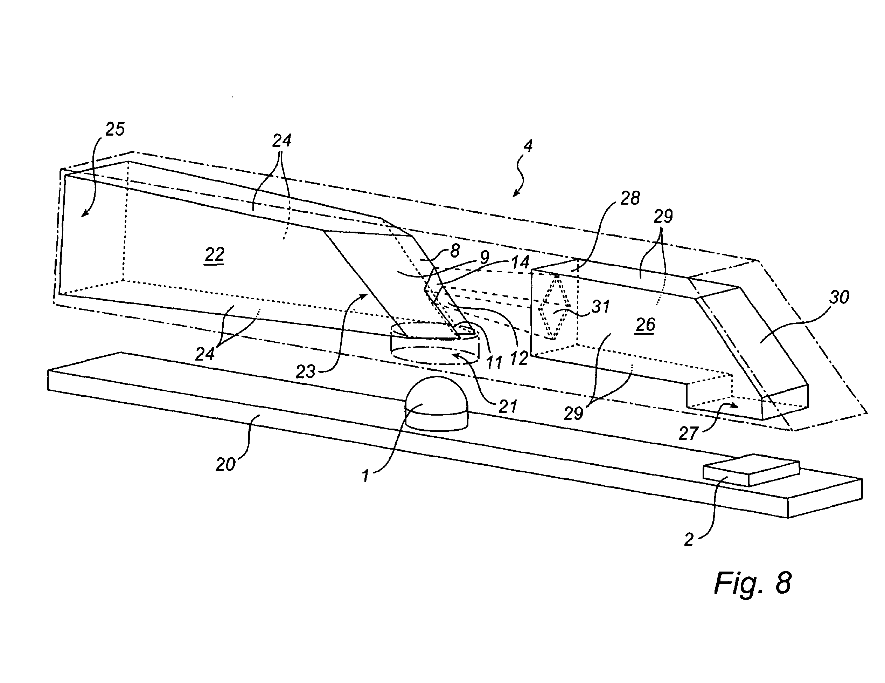

Figs 8-10 show a third alternative embodiment of the dual-path component, in which it is shaped as a shell. Figs 8-10 show the component in a perspective view, a front part bottom view and a front view, respectively, with the aim of illustrating the interior surfaces of the shell-shaped component 4. Thus, the body contour of the component is only outlined in chain lines, whereas the interior surfaces are indicated with full lines, or dotted lines when one interior surface is hidden behind another interior surface.

As indicated in Fig. 8, the dual-path component 4 is adapted to be fitted onto a printed circuit board (PCB) 20 which mounts a radiation source 1 in the form of a light-emitting diode (LED), and an area sensor 2. Thus, the component 4 and the PCB 20 form an optical system of the type shown in Fig 3.

The component has a bottom side opening 21 which opens into an elongate front cavity 22 and is adapted to mate with the source 1. The front cavity 22 has a back wall 23 with reflective surfaces 8, 9, 11, 12 that form a mirror surface with an included transparent area 14. The mirror surface forms an angle of approximately 45° with the longitudinal center line of the cavity 22, which also coincides with optical axis of the system. Although the illustrated embodiment is based on the component layout of Fig. 4, the back wall 23 may have any suitable shape to achieve the desired function, for example as shown in Figs 5 and 6.

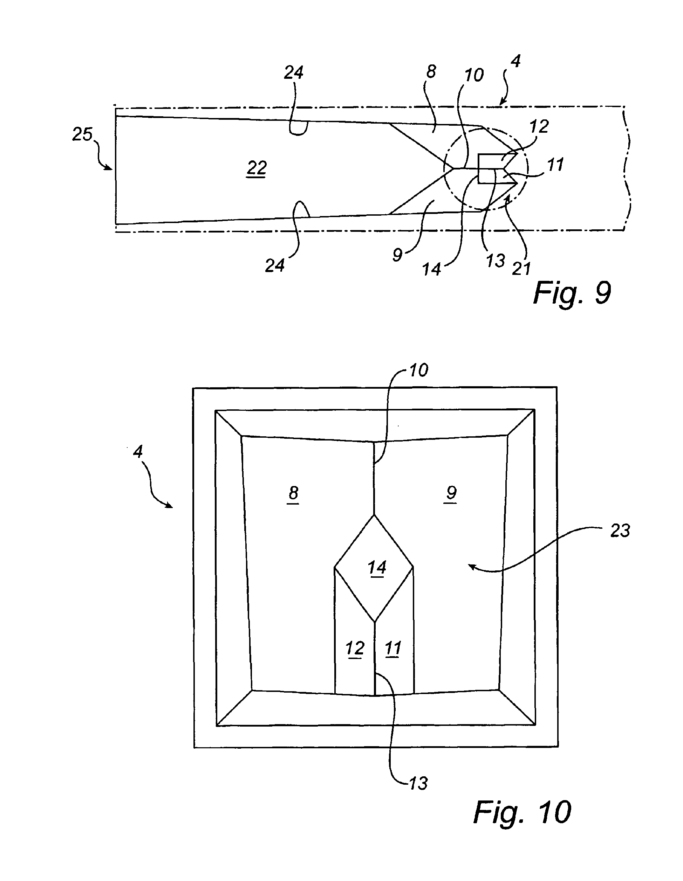

The front cavity 22 is further defined by elongate reflective side walls 24 which extend from the back wall 23 to an open front face 25, thereby defining a light guide. As shown more clearly in Figs 9 and 10, the side walls 24 are slightly inclined away from the longitudinal center line of the cavity 22 so as to form a light guide with gradually increasing cross-section towards the front face 25. Such a tapered light guide will serve to converge the diverging bundle of radiation as emitted by the source 1 and reflected by the back wall 23.

The front cavity 22 has the same function as the dual-path component of the above embodiments, i.e. to reflect radiation from the source 1 towards an object plane opposite to the front face 25 and to transmit radiation collected from the object plane through the transparent area 14. From Figs 9 and 10 it is clear that the reflective surfaces 8, 9, 11, 12 are arranged to be visible from both the entry opening 21 and the front face 25. Thus, radiation falling on these surfaces 8, 9, 11, 12 from the entry opening 21 or the front face 25 will be totally reflected. The transparent area 14, on the other hand, is arranged to be visible from the front face 25, so as to transmit radiation collected through the front face 25, and essentially hidden from view from the entry opening 21, so as to minimize direct transmission of source radiation.

The dual-path component of the third alternative embodiment of Figs 8-10 further has a back cavity 26 which is arranged in line with the front cavity 22. The back cavity 26 is adapted to receive radiation from the front cavity 22 and reflect this radiation towards a bottom side opening 27 which is shaped to mate with the sensor 2. The back cavity 26 is defined by a front wall 28, elongate side walls 29 and an inclined back wall 30. The front wall 28 is formed to transmit radiation from the front cavity 22 through a central transparent inlet area 31. The side walls 29 preferably has a low reflectivity to the received radiation, whereas the back wall 30 is highly reflective to such radiation. As indicated in Fig. 8, the transparent area 31 is formed as a lens surface which is adapted to image radiation from the object plane onto the sensor 2. For reasons of illustration, the distance between the first and second cavities 22, 26 is exaggerated in Fig. 8.

The dual-path component 4 according to the above embodiments may be manufactured by molding. The components of Figs 2-7 are suitably made from a material which is transparent to the radiation emitted by the source and captured from the object plane. The component of Figs 8-10 may also be made of such a material, if supplemented with a coating or insert of high reflectance on the back walls 23, 30 and on the side walls 24, and optionally a coating or insert of low transmission and low reflectance on the front wall 28 and on the side walls 29. Instead of using a coating or insert, the front wall 28 may be designed with an inherently non-transmissive shape, for example a shape similar to the shape of the back wall 23 of the front cavity 22 in Fig. 8. A transparent radiation path between the transparent areas 14, 31 is formed by the material itself.

According to an alternative, the component of Figs 8-10 is made of a radiation-blocking material. Then, there may only be a need for a coating or insert of high reflectance on the back walls 23, 30, and on the side walls 24. A transparent radiation path may be formed as a hollow channel extending between the transparent areas 14, 31.

According to another alternative, the component of Figs 8-10 is made of a reflecting material. Then, there may be a need for a coating of low reflectance on the side walls 29, and optionally on the front wall 28. A transparent radiation path may be formed as a hollow channel extending between the transparent areas 14, 31.

The invention has been described above in the form of a few exemplifying embodiments. However, the invention is in no way limited to these, but covers many other variants, according to what is defined by the scope of protection of the appended claims and, in addition, can easily be recognized by a person skilled in the art.

For example the mirror surface of the dual-path component may be of any shape, such as spherical, elliptic, hyperbolic, parabolic, faceted, etc. Likewise, the transparent window of the dual-path component may be of any shape, such as circular, elliptic, polygonal, etc.

Furthermore, the mirror surface of the dual-path component may be arranged at any suitable angle to the optical axis and the main direction of the source radiation, respectively.

The optical systems, the dual-path components and the methods for illuminating and imaging an object plane, as described hereinabove, may be used in a handheld device, such as an optical pen, a bar code or text scanner, a pointing device, etc. However, the invention may also find other applications, in particular when there is a need for a large depth of field and/or space-efficent design and/or efficent light-gathering ability, such as in devices for computer and machine vision, portable medical and scientific instrumentation, miniaturized cameras, etc.

## Claims

1. An optical system comprising an optical component (4) and a radiation source (1), wherein the optical component (4) comprises a front radiation inlet (15; 25), a bottom radiation inlet (7; 21), which is arranged to face the radiation source (1), and an interaction surface (8, 9, 11, 12, 14), which is arranged to interact with radiation entering the optical component (4), said interaction surface (8, 9, 11, 12, 14) comprising a reflective surface portion (8, 9, 11, 12) and a transparent surface portion (14), which is spatially separate from the reflective surface portion (8, 9, 11, 12), wherein the optical component (4) is arranged in relation to the radiation source (1) such that the reflective surface portion (8, 9, 11, 12) is arranged to reflect first radiation from the radiation source (1), entering the optical component (4) through the bottom radiation inlet (7; 21), towards the front radiation inlet (15; 25), and the transparent surface portion (14) is arranged to be screened from radiation from the radiation source (1) by being positioned in a plane whith is essentially parallel to the propagation direction of said incident first radiation, and wherein the transparent surface portion (14) is arranged to transmit second radiation entering the optical component (4) through the front radiation inlet (15; 25).

2. The optical system according to claim 1, wherein the reflective surface portion (8, 9, 11, 12) is arranged in surrounding relationship to the transparent surface portion (14).

3. The optical system according to claim 1 or 2, wherein the optical component (4) is arranged with the transparent surface portion (14) serving as a stop in the optical system.

4. The optical system according to claim 3, wherein the transparent surface portion (14) serves as an aperture stop in the optical system.

5. The optical system according to any one of the preceding claims, wherein the optical component (4) is arranged to reflect the first radiation essentially concentric with an optical axis (A) of the optical system.

6. The optical system according to any one of the preceding claims, wherein the transparent surface portion is positioned in a plane that is arranged essentially perpendicular to an optical axis (A) of the system.

7. The optical system according to any one of the preceding claims, wherein the reflective surface portion (8, 9, 11, 12) comprises two reflective roof faces (8, 9) which intersect in a trench line (10) to form a reflective roof section.

8. The optical system according to claim 7, wherein the transparent surface portion (14) is formed in the reflective roof section along and around the trench line (10).

9. The optical system according to claim 7 or 8, wherein the reflective surface portion (8, 9, 11, 12) comprises two secondary reflective roof faces (11, 12) which intersect in a ridge (13) to form part of the reflective roof section, the ridge (13) being essentially aligned with the trench line (10) and a transition between the trench line (10) and the ridge (13) defining the transparent surface portion (14).

10. The optical system according to claim 9, wherein the two secondary reflective roof faces (11, 12) intersect at a secondary roof angle which is in a range of about 45°-135°.

11. The optical system according to claim 10, wherein the secondary roof angle is essentially right.

12. The optical system according to any one of claims 7-11, wherein the two roof faces (8, 9) intersect at a roof angle which is in a range of about 45°-135°.

13. The optical system according to claim 12, wherein the roof angle is essentially right.

14. The optical system according to any one of the preceding claims, further comprising a light guide (17) which is arranged to receive the first radiation from the radiation source (1).

15. The optical system according to any one of the preceding claims, further comprising a light guide (17) which is arranged to receive the first radiation from the reflective surface portion (4a; 8, 9, 11, 12).

16. The optical system according to claim 14 or 15, wherein the light guide (17) is rectangular in cross-section.

17. The optical system according to any one of the preceding claims, wherein the optical component (4) comprises a body defining interior surfaces for providing the reflective surface portion (8, 9, 11, 12) and the transparent surface portion (14) and a cavity (22) for providing an optical path through the body.

18. The optical system according to any one of claims 1-16, wherein the optical component (4) is a prism.

19. The optical system according to any one of the preceding claims, wherein at least part of the reflective surface portion (8, 9, 11, 12) is coated with a reflecting material.

20. The optical system according to any one of the preceding claims, wherein the reflective surface portion (8, 9, 11, 12) is essentially totally reflective to the first radiation and the second radiation.

21. The optical system according to any one of the preceding claims, wherein the optical component (4) comprises a refractive surface (15) which is arranged to receive the first radiation from the reflective surface portion (8, 9, 11, 12).

22. The optical system according to claim 21, wherein the refractive surface (15) is a lens surface which is inclined relative to an optical axis of the optical system and is adapted to prevent retro-reflection of the first radiation into the transparent surface portion (14).

23. The optical system according to any one of the preceding claims, wherein the transparent surface portion (14) includes a refractive surface, such as an imaging lens surface for collecting the second radiation entering the optical component through the front radiation inlet (15; 25).

24. The optical system according to any one of the preceding claims, wherein the optical component includes a body which comprises: an open front face (25); a front cavity (22) defined by an internal periphery wall portion (24) which extends from the open front face (25) to a back wall portion (23); and an entry opening (21) in the periphery wall portion (24) adjacent to the back wall portion (23), wherein the back wall portion (23) comprises said reflective surface portion (8, 9, 11, 12) with said transparent surface portion (14) therein, wherein first radiation entering the front cavity (22) through the entry opening (21) is reflected on the reflective surface portion (8, 9, 11, 12) towards the front face (25), and wherein second radiation entering the front cavity (22) through the front face (25) is transmitted through the transparent surface portion (14).

25. The optical system according to claim 24, wherein the reflective surface portion (8, 9, 11, 12) is arranged to be visible from the entry opening (21) as well as from the front face (25), and wherein the transparent surface portion (14) is arranged to be visible from the front face (25) and essentially hidden from view from the entry opening (21).

26. The optical system according to claim 24 or 25, wherein the internal periphery wall portion (24) is elongate and reflective to the first radiation so that the front cavity (22) serves to guide the first radiation to the front face (25).

27. The optical system according to any one of claims 24-26, wherein the entry opening (21) is arranged to at least partly accommodate the radiation source (1).

28. The optical system according to any one of claims 24-27, which includes a refractive surface arranged in line with the transparent surface portion (14).

29. The optical system according to any one of claims 24-28, wherein said body further comprises a back cavity (26) which is defined by a first end wall portion (28), a second end wall portion (30) and a periphery wall portion (29) extending between the first and second end wall portions (28, 30), wherein an inlet (31) for the second radiation from the front cavity (22) is provided in the first end wall portion (28), wherein an outlet (27) for the second radiation is provided in the periphery wall portion (29) adjacent to the second end wall (30), and wherein the second end wall (30) is reflective to the second radiation and inclined towards the outlet (27).

30. The optical system according to claim 29, further comprising an image sensor (2) and wherein the outlet (27) comprises a recess adapted to accommodate the image sensor (2).

31. The optical system according to claim 30, which is adapted for mounting on a printed-circuit board (20) carrying the radiation source (1) and the image sensor (2), so as to align the radiation source (1) and the image sensor (2) with the entry opening (21) of the front cavity (22) and the outlet (27) of the back cavity (26), respectively.

32. The optical system according to any one of claims 29-31, wherein the peripheral wall portion (29) of the back cavity (26) is essentially non-reflective to the second radiation.

33. The optical system according to any one of claims 29-32, wherein the transparent surface portion (14) comprises a hole which opens to a radiation duct extending to the inlet (31) of the back cavity (26).

34. The optical system according to any one of claims 29-33, wherein a radiation path is formed between the transparent surface portion (14) and the inlet (31) of the back cavity (26) by a material that is transparent to the second radiation.

35. The optical system according to any one of claims 29-34, wherein the body is made of a material that is transparent to the second radiation.

36. The optical system according to any one of claims 29-35, wherein the first wall portion (28) comprises a refractive surface which is aligned with the inlet (31) and adapted to collect the second radiation from an object plane (5).

37. A handheld user unit for recording an image of an object, **characterized by** an optical system according to any one of claims 1-36.

38. Method for illuminating an object plane (5) and capturing an image thereof, comprising: activating a radiation source (1) to generate radiation, receiving at least part of the generated radiation on a stationary optical component comprising an interactive surface (8, 9, 11, 12, 14), which comprises a reflective surface portion (8, 9, 11, 12) and a transparent surface portion (14), which is physically connected to, but spatially separate from, the reflective surface portion (8, 9, 11, 12), and redirecting the generated radiation by reflection of the reflective surface portion (8, 9, 11, 12) towards the object plane (5), wherein the transparent surface portion (14) is arranged to be screened from the generated radiation by being positioned in a plane which is essentially parallel to a propagation direction (B) of the generated radiation incident on the reflective surface portion (8, 9, 11, 12), and collecting second radiation from the object plane (5) to form an image in an image plane (6), wherein the second radiation is collected through said transparent surface portion (14).

## Patentansprüche

1. Optisches System, das eine optische Komponente (4) und eine Strahlungsquelle (1) umfaßt, wobei die optische Komponente (4) einen vorderen Strahlungseinlaß (15; 25), einen unteren Strahlungseinlaß (7; 21), der so angeordnet ist, daß er der Strahlungsquelle (1) zugewandt ist, und eine Interaktionsoberfläche (8, 9, 11, 12, 14), die so angeordnet ist, daß sie mit der in die optische Komponente (4) eintretenden Strahlung interagiert, umfaßt, wobei die Interaktionsoberfläche (8, 9, 11, 12, 14) einen reflektierenden Oberflächenabschnitt (8, 9, 11, 12) und einen räumlich von dem reflektierenden Oberflächenabschnitt (8, 9, 11, 12) getrennten transparenten Oberflächenabschnitt (14) umfaßt, wobei die optische Komponente (4) derart in Relation zu der Strahlungsquelle (1) angeordnet ist, daß der reflektierende Oberflächenabschnitt (8, 9, 11, 12) angeordnet ist, um in die optische Komponente (4) durch den unteren Strahlungseinlaß (7; 21) eintretende erste Strahlung von der Strahlungsquelle (1) zu dem vorderen Strahlungseinlaß (15; 25) zu reflektieren, und der transparente Oberflächenabschnitt (14) angeordnet ist, gegenüber Strahlung von der Strahlungsquelle (1) abgeschirmt zu sein, indem er in eine Ebene positioniert ist, die im wesentlichen parallel zur Ausbreitungsrichtung der einfallenden ersten Strahlung verläuft, und wobei der transparente Oberflächenabschnitt (14) angeordnet ist, in die optische Komponente (4) durch den vorderen Strahlungseinlaß (15; 25) eintretende zweite Strahlung durchzulassen.

2. Optisches System nach Anspruch 1, wobei der reflektierende Oberflächenabschnitt (8, 9, 11, 12) in umgebender Beziehung zu dem transparenten Oberflächenabschnitt (14) angeordnet ist.

3. Optisches System nach Anspruch 1 oder 2, wobei die optische Komponente (4) so angeordnet ist, daß der transparente Oberflächenabschnitt (14) als eine Blende in dem optischen System dient.

4. Optisches System nach Anspruch 3, wobei der transparente Oberflächenabschnitt (14) als eine Aperturblende in dem optischen System dient.

5. Optisches System nach einem der vorhergehenden Ansprüche, wobei die optische Komponente (4) angeordnet ist, die erste Strahlung im wesentlichen konzentrisch zu einer optischen Achse (A) des optischen Systems zu reflektieren.

6. Optisches System nach einem der vorhergehenden Ansprüche, wobei der transparente Oberflächenabschnitt in einer Ebene positioniert ist, die im wesentlichen senkrecht zu einer optischen Achse (A) des Systems angeordnet ist.

7. Optisches System nach einem der vorhergehenden Ansprüche, wobei der reflektierende Oberflächenabschnitt (8, 9, 11, 12) zwei reflektierende Dachflächen (8, 9) umfaßt, die sich unter Ausbildung einer reflektierenden Dachsektion in einer Grabenlinie (10) schneiden.

8. Optisches System nach Anspruch 7, wobei der transparente Oberflächenabschnitt (14) in der reflektierenden Dachsektion entlang der und um die Grabenlinie (10) herum ausgebildet ist.

9. Optisches System nach Anspruch 7 oder 8, wobei der reflektierende Oberflächenabschnitt (8, 9, 11, 12) zwei sekundäre reflektierende Dachflächen (11, 12) umfaßt, die sich unter Ausbildung eines Teils der reflektierenden Dachsektion in einem Grat (13) schneiden, wobei der Grat (13) im wesentlichen auf die Grabenlinie (10) ausgerichtet ist und ein Übergang zwischen der Grabenlinie (10) und dem Grat (13) den transparenten Oberflächenabschnitt (14) definiert.

10. Optisches System nach Anspruch 9, wobei die zwei sekundären reflektierenden Dachflächen (11, 12) sich unter einem sekundären Dachwinkel schneiden, der in einem Bereich von etwa 45°-135° liegt.

11. Optisches System nach Anspruch 10, wobei der sekundäre Dachwinkel im wesentlichen ein rechter Winkel ist.

12. Optisches System nach einem der Ansprüche 7-11, wobei die beiden Dachflächen (8, 9) sich bei einem Dachwinkel schneiden, der in einem Bereich von etwa 45°-135° liegt.

13. Optisches System nach Anspruch 12, wobei der Dachwinkel im wesentlichen ein rechter Winkel ist.

14. Optisches System nach einem der vorhergehenden Ansprüche, weiterhin umfassend einen Lichtleiter (17), der angeordnet ist zum Empfangen der ersten Strahlung von der Strahlungsquelle (1).

15. Optisches System nach einem der vorhergehenden Ansprüche, weiterhin umfassend einen Lichtleiter (17), der angeordnet ist zum Empfangen der ersten Strahlung von dem reflektierenden Oberflächenabschnitt (4a; 8, 9, 11, 12).

16. Optisches System nach Anspruch 14 oder 15, wobei der Lichtleiter (17) einen rechteckigen Querschnitt aufweist.

17. Optisches System nach einem der vorhergehenden Ansprüche, wobei die optische Komponente (4) einen Körper umfaßt, der innere Oberflächen zum Bereitstellen des reflektierenden Oberflächenabschnitts (8, 9, 11, 12) und des transparenten Oberflächenabschnitts (14) und einen Hohlraum (22) zum Bereitstellen eines optischen Wegs durch den Körper definiert.

18. Optisches System nach einem der Ansprüche 1-16, wobei die optische Komponente (4) ein Prisma ist.

19. Optisches System nach einem der vorhergehenden Ansprüche, wobei mindestens ein Teil des reflektierenden Oberflächenabschnitts (8, 9, 11, 12) mit einem reflektierenden Material beschichtet ist.

20. Optisches System nach einem der vorhergehenden Ansprüche, wobei der reflektierende Oberflächenabschnitt (8, 9, 11, 12) für die erste Strahlung und die zweite Strahlung im wesentlichen total reflektierend ist.

21. Optisches System nach einem der vorhergehenden Ansprüche, wobei die optische Komponente (4) eine brechende Oberfläche (15) umfaßt, die angeordnet ist zum Empfangen der ersten Strahlung von dem reflektierenden Oberflächenabschnitt (8, 9, 11, 12).

22. Optisches System nach Anspruch 21, wobei die brechende Oberfläche (15) eine Linsenoberfläche ist, die relativ zu einer optischen Achse des optischen System geneigt ist und ausgelegt ist, eine Retroreflexion der ersten Strahlung in den transparenten Oberflächenabschnitt (14) zu verhindern.

23. Optisches System nach einem der vorhergehenden Ansprüche, wobei der transparente Oberflächenabschnitt (14) eine brechende Oberfläche wie etwa eine Abbildungslinsenoberfläche zum Sammeln der in die optische Komponente durch den vorderen Strahlungseinlaß (15; 25) eintretenden zweiten Strahlung enthält.

24. Optisches System nach einem der vorhergehenden Ansprüche, wobei die optische Komponente einen Körper enthält, der folgendes umfaßt: eine offene Vorderfläche (25); einen vorderen Hohlraum (22), der durch einen internen Peripheriewandabschnitt (24) definiert wird, der von der offenen Vorderfläche (25) zu einem hinteren Wandabschnitt (23) verläuft; und eine Eintrittsöffnung (21) in dem Peripheriewandabschnitt (24) neben dem hinteren Wandabschnitt (23), wobei der hintere Wandabschnitt (23) den reflektierenden Oberflächenabschnitt (8, 9, 11, 12) mit dem transparenten Oberflächenabschnitt (14) darin umfaßt, wobei in den vorderen Hohlraum (22) durch die Eintrittsöffnung (21) eintretende erste Strahlung auf dem reflektierenden Oberflächenabschnitt (8, 9, 11, 12) zu der Vorderfläche (25) reflektiert wird, und wobei in den vorderen Hohlraum (22) durch die Vorderfläche (25) eintretende zweite Strahlung durch den transparenten Oberflächenabschnitt (14) durchgelassen wird.

25. Optisches System nach Anspruch 24, wobei der reflektierende Oberflächenabschnitt (8, 9, 11, 12) angeordnet ist, um von der Eintrittsöffnung (21) sowie von der Vorderfläche (25) sichtbar zu sein, und wobei der transparente Oberflächenabschnitt (14) angeordnet ist, um von der Vorderfläche (25) aus sichtbar zu sein und von der Eintrittsöffnung (21) aus dem Blick im wesentlichen verborgen ist.

26. Optisches System nach Anspruch 24 oder 25, wobei der interne Peripheriewandabschnitt (24) länglich und für die Strahlung reflektierend ist, so daß der vordere Hohlraum (22) zum Führen der ersten Strahlung zu der Vorderfläche (25) dient.

27. Optisches System nach einem der Ansprüche 24-26, wobei die Eintrittsöffnung (21) angeordnet ist, um die Strahlungsquelle (1) zumindest teilweise aufzunehmen.

28. Optisches System nach einem der Ansprüche 24-27, das eine in einer Linie mit dem transparenten Oberflächenabschnitt (14) angeordnete brechende Oberfläche enthält.

29. Optisches System nach einem der Ansprüche 24-28, wobei der Körper weiterhin einen hinteren Hohlraum (26) umfaßt, der durch einen ersten Endwandabschnitt (28), einen zweiten Endwandabschnitt (30) und einen Peripheriewandabschnitt (29) definiert wird, der zwischen dem ersten und zweiten Endwandabschnitt (28, 30) verläuft, wobei ein Einlaß (31) für die zweite Strahlung von dem vorderen Hohlraum (22) in dem ersten Endwandabschnitt (28) vorgesehen ist, wobei ein Auslaß (27) für die zweite Strahlung in dem Peripheriewandabschnitt (29) neben der zweiten Endwand (30) vorgesehen ist und wobei die zweite Endwand (30) für die zweite Strahlung reflektierend ist und zum Auslaß (27) geneigt ist.

30. Optisches System nach Anspruch 29, weiterhin umfassend einen Bildsensor (2) und wobei der Auslaß (27) eine für das Aufnehmen des Bildsensor (2) ausgelegte Vertiefung umfaßt.

31. Optisches System nach Anspruch 30, das ausgelegt ist zum Montieren auf einer Leiterplatte (20), die Strahlungsquelle (1) und den Bildsensor (2) zu tragen, um die Strahlungsquelle (1) und den Bildsensor (2) auf die Eintrittsöffnung (21) des vorderen Hohlraums (22) bzw. den Auslaß (27) des hinteren Hohlraums (26) auszurichten.

32. Optisches System nach einem der Ansprüche 29-31, wobei der Peripheriewandabschnitt (29) des hinteren Hohlraums (26) für die zweite Strahlung im wesentlichen nicht-reflektierend ist.

33. Optisches System nach einem der Ansprüche 29-32, wobei der transparente Oberflächenabschnitt (14) ein Loch umfaßt, das sich zu einem Strahlungskanal öffnet, der zu dem Einlaß (31) des hinteren Hohlraums (26) verläuft.

34. Optisches System nach einem der Ansprüche 29-33, wobei ein Strahlungsweg zwischen dem transparenten Oberflächenabschnitt (14) und dem Einlaß (31) des hinteren Hohlraums (26) durch ein Material ausgebildet ist, das für die zweite Strahlung transparent ist.

35. Optisches System nach einem der Ansprüche 29-34, wobei der Körper aus Material hergestellt ist, das für die zweite Strahlung transparent ist.

36. Optisches System nach einem der Ansprüche 29-35, wobei der erste Randabschnitt (28) eine brechende Oberfläche umfaßt, die auf den Einlaß (31) ausgerichtet und dafür ausgelegt ist, die zweite Strahlung von einer Objektebene (5) zu sammeln.

37. Handgehaltene Benutzereinheit zum Aufzeichnen eines Bilds eines Objekts, **gekennzeichnet durch** ein optisches System nach einem der Ansprüche 1-36.

38. Verfahren zum Beleuchten einer Objektebene (5) und Einfangen eines Bildes davon, umfassend: Aktivieren einer Strahlungsquelle (1) zum Erzeugen von Strahlung, Empfangen mindestens eines Teils der erzeugten Strahlung auf einer stationären optischen Komponente umfassend eine interaktive Oberfläche (8, 9, 11, 12, 14), die einen reflektierenden Oberflächenabschnitt (8, 9, 11, 12) und einen transparenten Oberflächenabschnitt (14) umfaßt, der physisch mit dem reflektierenden Oberflächenabschnitt (8, 9, 11, 12) verbunden, jedoch räumlich davon getrennt ist, und Umlenken der erzeugten Strahlung durch Reflexion des reflektierenden Oberflächenabschnitts (8, 9, 11, 12) zu der Objektebene (5), wobei der transparente Oberflächenabschnitt (14) angeordnet ist, um gegenüber der erzeugten Strahlung abgeschirmt zu sein, indem er in einer Ebene positioniert ist, die im wesentlichen parallel zu einer Ausbreitungsrichtung (B) der auf den reflektierenden Oberflächenabschnitt (8, 9, 11, 12) einfallenden erzeugten Strahlung verläuft, und Sammeln zweiter Strahlung von der Objektebene (5) zum Ausbilden eines Bildes in einer Bildebene (6), wobei die zweite Strahlung durch den transparenten Oberflächenabschnitt (14) gesammelt wird.

## Revendications

1. Système optique comprenant un composant optique (4) et une source de rayonnement (1), dans lequel le composant optique (4) comprend une entrée de rayonnement frontale (15 ; 25), une entrée de rayonnement inférieure (7 ; 21), qui est disposée pour faire face à la source de rayonnement (1), et une surface d'interaction (8, 9, 11, 12, 14), qui est disposée pour interagir avec un rayonnement pénétrant dans le composant optique (4), ladite surface d'interaction (8, 9, 11, 12, 14) comprenant une portion de surface réfléchissante (8, 9, 11, 12) et une portion de surface transparente (14), qui est séparée spatialement de la portion de surface réfléchissante (8, 9, 11, 12), dans lequel le composant optique (4) est disposé relativement à la source de rayonnement (1) de telle sorte que la portion de surface réfléchissante (8, 9, 11, 12) est disposée pour réfléchir un premier rayonnement provenant de la source de rayonnement (1), pénétrant dans le composant optique (4) par l'entrée de rayonnement inférieure (7 ; 21), en direction de l'entrée de rayonnement frontale (15 ; 25), et la portion de surface transparente (14) est disposée pour être masquée du rayonnement provenant de la source de rayonnement (1) en étant positionnée dans un plan qui est essentiellement parallèle à la direction de propagation dudit premier rayonnement incident, et dans lequel la portion de surface transparente (14) est disposée pour transmettre un deuxième rayonnement pénétrant dans le composant optique (4) par l'entrée de rayonnement frontale (15 ; 25).

2. Système optique selon la revendication 1, dans lequel la portion de surface réfléchissante (8, 9, 11, 12) est disposée dans une relation d'encerclement avec la portion de surface transparente (14).

3. Système optique selon la revendication 1 ou 2, dans lequel le composant optique (4) est disposé avec la portion de surface transparente (14) servant de diaphragme dans le système optique.

4. Système optique selon la revendication 3, dans lequel la portion de surface transparente (14) sert de diaphragme d'ouverture dans le système optique.

5. Système optique selon l'une quelconque des revendications précédentes, dans lequel le composant optique (4) est disposé pour réfléchir le premier rayonnement de façon essentiellement concentrique avec un axe optique (A) du système optique.

6. Système optique selon l'une quelconque des revendications précédentes, dans lequel la portion de surface transparente est positionnée dans un plan qui est disposé de façon essentiellement perpendiculaire à un axe optique (A) du système.

7. Système optique selon l'une quelconque des revendications précédentes, dans lequel la portion de surface réfléchissante (8, 9, 11, 12) comprend deux faces de toit réfléchissantes (8, 9) qui se coupent en une ligne de tranchée (10) pour former une section de toit réfléchissante.

8. Système optique selon la revendication 7, dans lequel la portion de surface transparente (14) est formée dans la section de toit réfléchissante le long et autour de la ligne de tranchée (10).

9. Système optique selon la revendication 7 ou 8, dans lequel la portion de surface réfléchissante (8, 9, 11, 12) comprend deux faces de toit réfléchissantes secondaires (11, 12) qui se coupent en une arête (13) pour former une partie de la section de toit réfléchissante, l'arête (13) étant essentiellement alignée avec la ligne de tranchée (10) et une transition entre la ligne de tranchée (10) et l'arête (13) définissant la portion de surface transparente (14).

10. Système optique selon la revendication 9, dans lequel les deux faces de toit réfléchissantes secondaires (11, 12) se coupent à un angle de toit secondaire qui se situe dans une gamme d'environ 45°-135°.

11. Système optique selon la revendication 10, dans lequel l'angle de toit secondaire est essentiellement droit.

12. Système optique selon l'une quelconque des revendications 7 à 11, dans lequel les deux faces de toit (8, 9) se coupent à un angle de toit qui se situe dans une gamme d'environ 45°-135°.

13. Système optique selon la revendication 12, dans lequel l'angle de toit est essentiellement droit.

14. Système optique selon l'une quelconque des revendications précédentes, comprenant en outre un conduit de lumière (17) qui est disposé pour recevoir le premier rayonnement provenant de la source de rayonnement (1).

15. Système optique selon l'une quelconque des revendications précédentes, comprenant en outre un conduit de lumière (17) qui est disposé pour recevoir le premier rayonnement provenant de la portion de surface réfléchissante (4a ; 8, 9, 11, 12).

16. Système optique selon la revendication 14 ou 15, dans lequel le conduit de lumière (17) est rectangulaire en coupe.

17. Système optique selon l'une quelconque des revendications précédentes, dans lequel le composant optique (4) comprend un corps définissant des surfaces intérieures pour fournir la portion de surface réfléchissante (8, 9, 11, 12) et la portion de surface transparente (14) et une cavité (22) pour fournir un chemin optique à travers le corps.

18. Système optique selon l'une quelconque des revendications 1 à 16, dans lequel le composant optique (4) est un prisme.

19. Système optique selon l'une quelconque des revendications précédentes, dans lequel au moins une partie de la portion de surface réfléchissante (8, 9, 11, 12) est recouverte d'un matériau réfléchissant.

20. Système optique selon l'une quelconque des revendications précédentes, dans lequel la portion de surface réfléchissante (8, 9, 11, 12) est presque totalement réfléchissante pour le premier rayonnement et le deuxième rayonnement.

21. Système optique selon l'une quelconque des revendications précédentes, dans lequel le composant optique (4) comprend une surface réfractive (15) qui est disposée pour recevoir le premier rayonnement provenant de la portion de surface réfléchissante (8, 9, 11, 12).

22. Système optique selon la revendication 21, dans lequel la surface réfractive (15) est une surface de lentille qui est inclinée par rapport à un axe optique du système optique et est adaptée pour empêcher une rétroréflexion du premier rayonnement à l'intérieur de la portion de surface transparente (14).

23. Système optique selon l'une quelconque des revendications précédentes, dans lequel la portion de surface transparente (14) comprend une surface réfractive, telle qu'une surface de lentille de formation d'image pour collecter le deuxième rayonnement pénétrant dans le composant optique par l'entrée de rayonnement frontale (15 ; 25).

24. Système optique selon l'une quelconque des revendications précédentes, dans lequel le composant optique comporte un corps qui comprend : une face avant ouverte (25) ; une cavité frontale (22) définie par une portion de paroi de périphérie interne (24) qui s'étend depuis la face avant ouverte (25) jusqu'à une portion de paroi arrière (23) ; et une ouverture d'entrée (21) dans la portion de paroi de périphérie (24) adjacente à la portion de paroi arrière (23), dans lequel la portion de paroi arrière (23) comprend ladite portion de surface réfléchissante (8, 9, 11, 12) avec ladite portion de surface transparente (14) à l'intérieur, dans lequel un premier rayonnement pénétrant dans la cavité frontale (22) par l'ouverture d'entrée (21) est réfléchi sur la portion de surface réfléchissante (8, 9, 11, 12) en direction de la face avant (25), et dans lequel un deuxième rayonnement pénétrant dans la cavité frontale (22) par la face avant (25) est transmis à travers la portion de surface transparente (14).

25. Système optique selon la revendication 24, dans lequel la portion de surface réfléchissante (8, 9, 11, 12) est disposée pour être visible depuis l'ouverture d'entrée (21) ainsi que depuis la face avant (25), et dans lequel la portion de surface transparente (14) est disposée pour être visible depuis la face avant (25) et essentiellement masquée à la vue depuis l'ouverture d'entrée (21) .

26. Système optique selon la revendication 24 ou 25, dans lequel la portion de paroi de périphérie interne (24) est allongée et réfléchissante pour le premier rayonnement de telle sorte que la cavité frontale (22) sert à guider le premier rayonnement vers la face avant (25).

27. Système optique selon l'une quelconque des revendications 24 à 26, dans lequel l'ouverture d'entrée (21) est disposée pour accueillir au moins partiellement la source de rayonnement (1).

28. Système optique selon l'une quelconque des revendications 24 à 27, qui comprend une surface réfractive disposée en ligne avec la portion de surface transparente (14).

29. Système optique selon l'une quelconque des revendications 24 à 28, dans lequel ledit corps comprend en outre une cavité arrière (26) qui est définie par une première portion de paroi d'extrémité (28), une deuxième portion de paroi d'extrémité (30) et une portion de paroi de périphérie (29) s'étendant entre les première et deuxième portions de paroi d'extrémité (28, 30), dans lequel une entrée (31) pour le deuxième rayonnement provenant de la cavité frontale (22) est prévue dans la première portion de paroi d'extrémité (28), dans lequel une sortie (27) pour le deuxième rayonnement est prévue dans la portion de paroi de périphérie (29) adjacente à la deuxième paroi d'extrémité (30), et dans lequel la deuxième paroi d'extrémité (30) est réfléchissante pour le deuxième rayonnement et inclinée en direction de la sortie (27).

30. Système optique selon la revendication 29, comprenant en outre un capteur d'image (2) et dans lequel la sortie (27) comprend une encoche adaptée pour recevoir le capteur d'image (2).

31. Système optique selon la revendication 30, qui est adapté pour un montage sur une carte de circuit imprimé (20) portant la source de rayonnement (1) et le capteur d'image (2), de manière à aligner la source de rayonnement (1) et le capteur d'image (2) avec l'ouverture d'entrée (21) de la cavité frontale (22) et la sortie (27) de la cavité arrière (26), respectivement.

32. Système optique selon l'une quelconque des revendications 29 à 31, dans lequel la portion de paroi périphérique (29) de la cavité arrière (26) est essentiellement non réfléchissante pour le deuxième rayonnement.

33. Système optique selon l'une quelconque des revendications 29 à 32, dans lequel la portion de surface transparente (14) comprend un trou qui s'ouvre dans un conduit de rayonnement s'étendant jusqu'à l'entrée (31) de la cavité arrière (26).

34. Système optique selon l'une quelconque des revendications 29 à 33, dans lequel un chemin de rayonnement est formé entre la portion de surface transparente (14) et l'entrée (31) de la cavité arrière (26) par un matériau qui est transparent pour le deuxième rayonnement.

35. Système optique selon l'une quelconque des revendications 29 à 34, dans lequel le corps est constitué d'un matériau qui est transparent pour le deuxième rayonnement.

36. Système optique selon l'une quelconque des revendications 29 à 35, dans lequel la première portion de paroi (28) comprend une surface réfractive qui est alignée avec l'entrée (31) et adaptée pour collecter le deuxième rayonnement provenant d'un plan objet (5).

37. Unité d'utilisateur portative pour enregistrer une image d'un objet, **caractérisée par** un système optique selon l'une quelconque des revendications 1 à 36.

38. Procédé pour éclairer un plan objet (5) et capturer une image de celui-ci, comprenant : l'activation d'une source de rayonnement (1) pour générer un rayonnement, la réception d'au moins une partie du rayonnement généré sur un composant optique stationnaire comprenant une surface interactive (8, 9, 11, 12, 14) qui comprend une portion de surface réfléchissante (8, 9, 11, 12) et une portion de surface transparente (14), qui est reliée physiquement à, mais séparée spatialement de, la portion de surface réfléchissante (8, 9, 11, 12), et la redirection du rayonnement généré par réflexion sur la portion de surface réfléchissante (8, 9, 11, 12) en direction du plan objet (5), dans lequel la portion de surface transparente (14) est disposée pour être masquée du rayonnement généré en étant positionnée dans un plan qui est essentiellement parallèle à une direction de propagation (B) du rayonnement généré incident sur la portion de surface réfléchissante (8, 9, 11, 12), et collecter un deuxième rayonnement provenant du plan objet (5) pour former une image dans un plan image (6), dans lequel le deuxième rayonnement est collecté par ladite portion de surface transparente (14).
